# EUROPEAN PATENT APPLICATION

(11) **EP 1 088 722 A2**
(43) Date of publication of application: **04.04.2001**
(21) Application number: 99203422.3
(22) Date of filing: 19.10.1999
(51) Int. Cl.: B60S 9/10

(54) **Device for fixing or bringing a vehicle in a certain position**

(30) Priority: 29.09.1999 NL 1013162
(71) Applicant: Treston Ltd., Central Hong Kong (CN)
(72) Inventor: Boonzaayer, Gerard Johannes Viktor, 7905 ET Hoogeveen (NL)
(74) Representative: Lips, Hendrik Jan George, Ir.

(57) **Abstract**

The invention relates to a device for adjusting or supporting in particular a caravan or another vehicle in a horizontal position, to which end height-adjustable support members mounted at the angular points of the caravan, driving members for height adjustment of the support members, a position detection member and control means for determining the position of the caravan in relation to a reference position dependent on position dectection signals from the position detection member and driving the driving members for the support members dependent of the detected position have been provided.

## Description

The invention relates to a device for fixing or bringing a vehicle in a certain position, in particular in a horizontal position. The vehicles are substantially caravans or similar vehicles, which are moved to another location from time to time and must be levelled repeatedly.

For levelling, a caravan is provided with adjustable support members usually being mounted at all angular points of the caravan. According to the usual method, actual levelling is carried out in the easiest way with two persons, one of them taking measurements with the air level in the caravan and the second person adjusting the support members on the directions of the first person. Naturally, levelling can also be carried out by one person, however, this requires much more time, as will be apparent. All this results in the fact that levelling is not always carried out accurately, which can easily lead to an incorrectly sloping sink, a table slanting too strongly or a bed slanting the wrong way.

The object of the invention is to remove these disadvantages and to provide a device by which the vehicle can be quickly levelled in simple way. A further object of the invention is to provide for, that levelling of a vehicle can only take place from a safe starting position of the vehicle, that is, from a position within a predetermined sloping range.

Accordingly, the invention provides for, that for a vehicle having at least three support members, the device is provided with driving members for height adjustment of the support members, a position detection member and control means for controlling the driving members for the support members depending on position detection signals from said position detection member.

With the device according to the invention, simply supplying the correct control signal to a microprocessor incorporated in the control means will start the levelling process. Here, the position detection signals coming from the position detection member are very important, in which the invention preferably provides a position detection member being arranged for detecting deviations and changes in relation to a reference position along two axes as changes in capacitive values. Within the sloping range in which by means of the device a caravan or similar vehicle can be levelled, said changes in capacitive values are linear, which has the advantage that positions and position changes can be detected with high accuracy and therefore the driving members of the support members can be controlled with correspondingly high accuracy from said control means.

Thus, the result is that a vehicle such as a caravan can be levelled with high accuracy, but that it could also be set across a predetermined angle in relation to a reference position with high accuracy.

The position detection member and the control means are preferably incorporated in one housing, in which the housing is mounted on a fixed surface within the vehicle, such as e.g. the floor of a caravan, that can function as reference plane for levelling. A reference mark has been applied on the housing, indicating in which direction the housing and thus the position detection member should be located in relation to the longitudinal axis and transverse axis or wheel axis of the caravan, actually the coordinate system through the support members mounted on the angular points. Through this, orientation of the coordinate system of the position detection member in relation to coordinate system of the support members can be easily determined in that the axes of the position detection member are approximately parallel to longitudinal and transverse axes of the vehicle or corresponding axes through the support members. This is important for adjustment, since adjusting involves largely adjustments occurring along axes of rotation being parallel to said axes, as a result of which during adjustment, an approximately maximum change in capacitive value per angular unit can be obtained for each axis of the position detection member.

Preferably, it is further provided for, that predetermined axes of the position detection member extend parallel to transvere and longitudinal axes, respectively, and more preferably, that the coordinate systems have an approximately fixed orientation in relation to each other. This enables working with one standard program from which the various possible functions for any caravan or similar vehicle can be controlled without any further adaptations.

An approximately fixed orientation of the position detection member is important because the invention provides for that the control means are arranged such that fixing the vehicle in a position and bringing it into the reference position is only possible from a predetermined range of possible positions.

More in particular, it is preferred that the control means for bringing the vehicle into the reference position can only be initialized from a vehicle inclined forwards. This provides for, that a caravan inclined backwards due to a supporting wheel, mounted near the free end of the pole, being set too high, can not be brought into the reference position with the help of the adjustable support members.
In order to reach the reference position, the caravan would have to come loose from the ground with its wheels, and the mounting locations of the adjustable support members are not designed for that load.

Further, it is also provided for that the control means are arranged such that with an angle of inclination in longitudinal direction in relation to the horizontal larger than a predetermined angle from a range of 5 - 15° the vehicle can not be brought into the reference position, and that with an angle of inclination in transversal direction in relation to the horizontal larger than a predetermined angle from a range of 1 - 5° the vehicle can not be brought into the reference position either. More preferably, these maximum values are 10° and 3°, respectively, however, these values depend on the specific dimensions of the caravan or other vehicle and can also be entered anew in the software, if necessary. With excessive deviations from the reference position, extending the support members will not be sufficient for correction of the position and will possibly cause excessive load on the fastening points of the support members.

Further, the invention provides for that the control means are arranged for e.g. supporting the caravan in an arbitrary position, as long as said position is within the given maximum lateral angle of inclination and the maximum longitudinal angle of inclination. This so-called parking position is a solution if one makes a short stop and wishes to use the facilities provided in the caravan, such as toilet and kitchen, for example. In order to achieve said parking position, it is provided for that the control means are arranged such that on reaching a predetermined current intensity in the control of individual support members, control thereof will be terminated. In practice, this means that the control of a support member is stopped immediately after a support member has contacted the ground. When all support members have been positioned on the ground, the caravan or other vehicle has been stabilized and one can walk freely through the caravan or other vehicle without any danger of unexpected rocking.

The invention is further explained by way of an example given in the drawing, in which:
Fig. 1 shows schematically an electrical diagram of the device having the adjustable support members; and

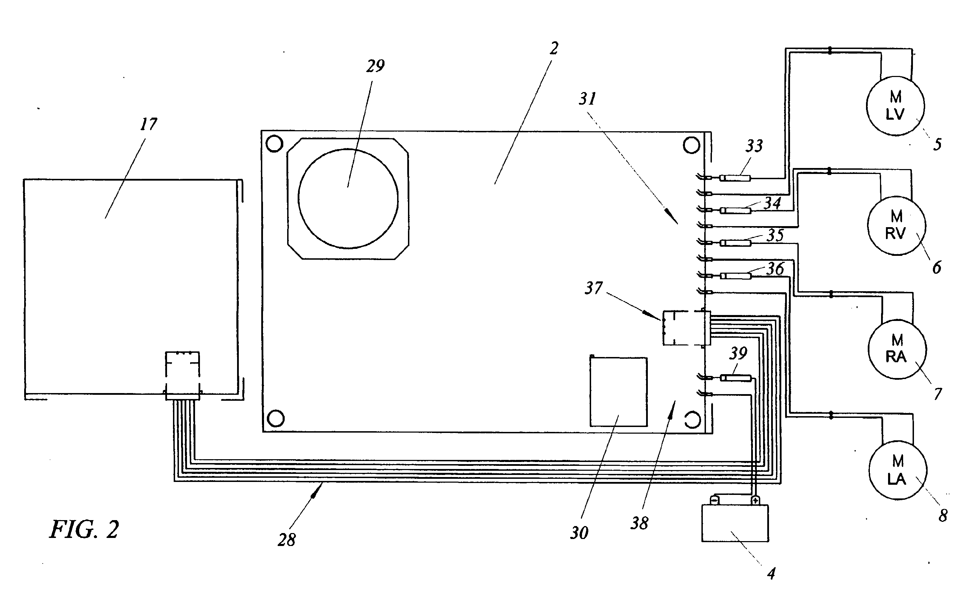

Fig. 2 shows a connection diagram in more detail.

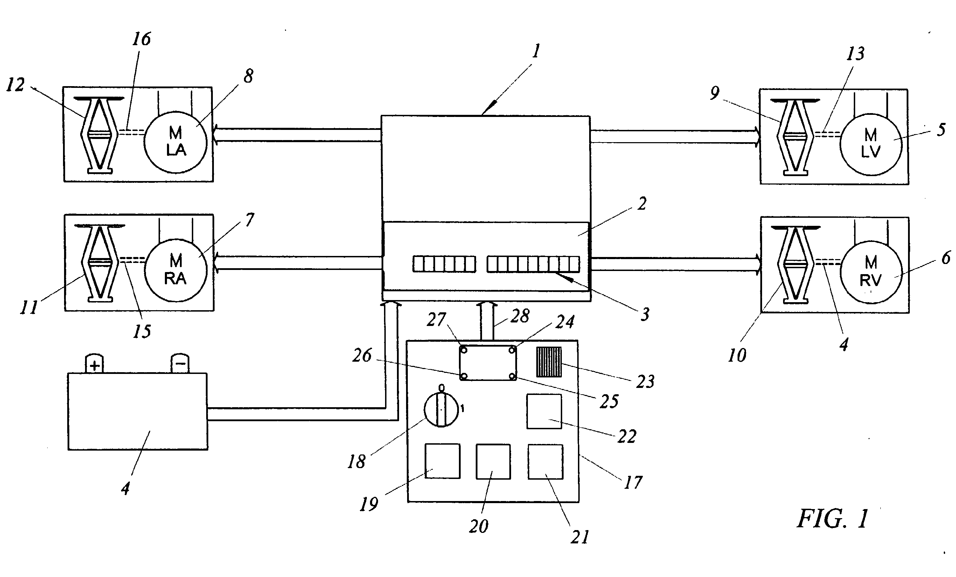

In Fig. 1, 1 indicates the control unit of the device incorporated in a housing, containing a control print 2 and connecting block 3 for the required wiring. The housing having the control unit is arranged to be mounted in a fixed orientation on e.g. the floor of a caravan or other vehicle. In the given example, the supply voltage comes from an accumulator 4, but can of course also be acquired from a presented external supply mains, if necessary through a transformer.

From the control unit 1, the electric motors 5, 6, 7, 8 can be driven, by means of which the adjustable support members 9, 10, 11, 12 mounted at or near the angular points can be driven. The adjustable support members are preferably of a quickly adjustable type as a result of which levelling and other functions can be effected considerably quicker than would be the case if the electric motors 5, 6, 7, 8 would be employed for driving standard support members, which are actually intended for manual adjustment only.

Between said electric motors 5, 6, 7, 8 and the spindles not shown of the adjustable support members 9, 10, 11, 12, coupling rods 13, 14, 15, 16 have been mounted. These coupling rods have been releasably mounted between said electric motors and said spindles, so that they can be removed if necessary, e.g. in case of power failure or an empty accumulator, and the support members can still be adjusted manually.

Furthermore, this facility is required when calibrating and, if necessary, recalibrating the device, since then the caravan or other vehicle must be brought into the desired reference position by means of air level and manual adjustment, in which they should be disengaged from the electric motors. After calibration, in which the reference position was stored in the memory of the control unit, the coupling rods can be secured again.

Further, an actuating member 17 having a switching contact 18, which is preferably a key contact for safety reasons, and contact switches 19, 20, 21 for the functions of levelling, parking and retracting the support members from both positions have been provided for. Apart from that, a contact switch 22 has been provided, which is capable of immediately interrupting all functions and is therefore an emergency switch. Finally, an acoustic signalling means 23 and four LEDs 24, 25, 26, 27 have been provided. The LEDs can indicate the driven support members, and the LEDs and the acoustic signalling means 23 can indicate various functions, separate steps of the functions and error and/or alarm signals when calibrating and actuating the device.

The actuating member 17 is provided with a microprocessor of its own, making it possible to connect actuating member 17 through an e.g. serial cable 28 to the input of control unit 1 likewise provided with a microprocessor. Further, as a result of this it is possible to transmit complete sequences of programming and control instructions to control unit 1 through combinations of contact switches 19, 20, 21 and the time duration and/or alternation with which they are pressed and/or kept pressed.

Except with the serial cable mentioned in the example, communication between actuating member 17 and control unit 1 could also be realized wireless. This has the advantage that actuating member 17 need not be applied within or against the outside of said caravan or other vehicle, and can be operated at a distance from it, which is preferred for safety reasons.

On the schematically illustrated control print 2, only the position detection member 29 and the microprocessor 30 and connections provided at the front side of the print have been indicated to avoid making the drawing unnecessarily complicated. By positioning the device on the floor in such a way that the connections point forward in longitudinal direction of the caravan, the position detection member 29 will get exactly in the desired direction. As a result of that, redefining the orientation of the axes of the position detection member in relation to the caravan is not necessary, and calibration can be started immediately after mounting the device and the actuating member.

The connections at the front of the print concern firstly the connections 31 for the electric motors 5, 6, 7, 8. There it is essential that the electric motors are likewise connected in a predetermined order, e.g. in the Figure from top to bottom subsequently the electric motor for front left, front right, behind right and behind left. Further, an individual fuse 33, 34, 35, 36 has been provided for each motor.

The other connections at the front are the serial connection 37 of actuating member 17 and the connection 38 of accumulator 4 also having a fuse 39. With the use of a 12 Volt accumulator the fuses 33, 34, 35, 36 are e.g. 15A fuses and fuse 39 is a 30A fuse.

Since unlimited power consumption is not possible in a caravan, loading the accumulator or an external supply mains must take place as efficiently as possible. To that end it is provided for that the electric motors are driven in pulses so that it is not possible to draw an excessive peak current at the beginning of the driving. No more than two electric motors are driven simulataneously and furthermore the power consumption of each electric motor is monitored and on exceeding a predetermined value the driving will be interrupted and an error indication and/or alarm signal will be given.

When bringing the vehicle into the reference position, preferably one first makes a presetting consisting of a first adjustment around the transverse axis of the vehicle with 1 or 2 pairs of support members at the front and back sides, respectively, and a second adjustment around the longitudinal axis of the vehicle with 1 or 2 pairs of support members at the respective longitudinal sides. First, one begins with the front pair of support members 9, 10 since the programming causes the control only to start functioning from a forwardly inclined caravan. The presetting is followed by a finer readjustment, in which for each support member it is determined - in a fixed order or otherwise - whether it should be extended across a calculated or fixed predetermined step before reaching the reference position within a predetermined margin until the reference position for each support member is reached within the predetermined margin.

Apart from bringing the caravan or other vehicle into the reference position, the horizontal position, it is also possible to incorporate other positions in the program and to define the control commands required therefor to be given from the actuating member 17. In order to realize this in a simple way, the software can be incorporated in a memory module 2 located on the control print 2 and being exchangeable and reprogrammable.

## Claims

1. Device for fixing or bringing a vehicle in a certain position, said vehicle having at least three height-adjustable support members, driving members for height adjustment of said support members, a position detection member and control means for controlling the driving members for the support members depending on position detection signals from said position detection member.

2. Device according to claim 1, characterized in that the support members are mounted at the angular points of the vehicle.

3. Device according to claims 1 an 2, characterized in that the position detection member is arranged to be fixedly mounted on a reference plane, such as the floor of a vehicle.

4. Device according to claim 3, characterized in that the position detection member is arranged for detecting deviations and changes in relation to a reference position along two axes as changes in capacitive values.

5. Device according to claim 4, characterized in that the changes in capacitive values measured with said position detection member are linear for the sloping range from which a caravan or similar vehicle must be able to be fixed in a position or be brought to a certain position.

6. Device according to claims 4 and 5, characterized in that the position detection member is intended to be mounted within the vehicle with the axes of said position detection member being approximately parallel to the longitudinal and transverse directions of the vehicle, respectively.

7. Device according to claims 1 - 6, characterized in that the control means are arranged such that fixing the vehicle in a position and bringing it in the reference position is only possible from a predetermined range of possible positions.

8. Device according to claim 7, characterized in that the control means for bringing the vehicle in the reference position can only be initialized from a vehicle inclined forwards.

9. Device according to claims 7 and 8, characterized in that the control means are arranged such that when an angle of inclination in longitudinal direction in relation to the horizontal is larger than a predetermined angle from a range of 5 - 15°, the vehicle can not be brought in the reference position.

10. Device according to claims 7 - 9, characterized in that the control means are arranged such that when an angle of inclination in transverse direction in relation of the horizontal is larger than a predetermined angle from a range of 1 - 5°, the vehicle can not be brought in the reference position.

11. Device according to claims 7 - 10, characterized in that the control means are arranged such that when bringing the vehicle in the reference position, a preset takes place, consisting of a first adjustment for the transverse axis of the vehicle with 1 or 2 pairs of support members at front and back sides, respectively, and a second adjustment around the longitudinal axis of the vehicle with 1 or 2 pairs of support members at the respective longitudinal sides.

12. Device according to claim 11, characterized in that the control means are arranged such that after presetting, further adjustment takes place by determining for each support member, in a fixed order or otherwise, whether it should be extended across a calculated or fixed predetermined step before reaching the reference position within a predetermined margin until the reference position for each support member is reached before the predetermined margin.

13. Device according to claims 1 - 12, characterized in that the control means are arranged such that on achieving a predetermined current intensity in the drive of individual support members, the driving of said members will be stopped.

14. Device according to claims 1 - 13, characterized in that the driving members of the height-adjustable support members are driven in pulses.

15. Device according to claims 1 - 14, characterized in that it comprises an acuating member being provided with a microprocessor, which, through a data bus, is connected to a microprocessor being part of the control means.

16. Device according to the claims 1 - 15, characterized in that it comprises an actuating member being provided with a microprocessor, in which both device and actuating member are provided with transmitting/receiving means for communication between the microprocessor of the actuating member and a microprocessor being part of the control means.

17. Device according to the claims 1 - 15, characterized in that the actuating member is provided with signalling means emitting a signal, composed or not, dependent on functions executed by the control means and emitted error messages.
